# EUROPEAN PATENT APPLICATION

(11) **EP 2 873 632 A1**
(43) Date of publication of application: **20.05.2015**
(21) Application number: 14192414.2
(22) Date of filing: 10.11.2014
(51) Int. Cl.: B65F 1/00, B65G 19/02

(54) **Apparatus for collecting and compacting recyclable waste**

(30) Priority: 13.11.2013 IT MI20131884
(71) Applicant: Prima-Tech S.r.l., 25020 Flero (BS) (IT)
(72) Inventor: Molinari, Monica, 25020 Flero (IT); Molinari, Andrea, 25020 Flero (IT)
(74) Representative: Coloberti, Luigi

(57) **Abstract**

A method and an automatic apparatus for separate collection and compaction of beverage containers (W), in metal, glass and plastic material. The containers (W) are inserted manually from above, and at random, in open cells (13) of a step conveyor (12), moved along an annular path from a loading zone (12A), through an identifying zone (15) of the containing cells and the material of the containers (W), to an unloading zone (12B) where the single containers (W) are selectively unloaded through respective trapdoors and compacted in function of the identification signals of the material of the containers (W) in the open cells (13) emitted by sensors (29) at the identifying zone (15), operationally connected to a control unit (20) of the apparatus.

## Description

### BACKGROUND OF THE INVENTION

This invention relates to a method and an automatic apparatus suitable for separate collection and compaction of different types of beverage containers, such as metal cans, glass or plastic bottles and similar containers arising from post-consumption, by means of which it becomes possible to dispose of and compact the containers by manually inserting the containers, and completely randomly, in suitable open cells of the apparatus of a conveyor, to reduce the volume thereof

### STATE OF THE ART

The disposal of beverage containers arising from post-consumption, such as, for example, metal cans, glass or plastic bottles and similar containers, is an environmentally significant problem, both because of the economic value of the material of the single containers and the difficulty of an automatic separate collection due to the volume thereof and the costly and bulky apparatuses required for the disposal.

Separate collection of the beverage containers is of particular interest to public establishments because of the large quantities of containers to be collected and disposed of The problem of sorting and separate collection of containers of the previously mentioned type, and compaction to reduce the volume thereof, has been variously addressed over time; for example WO 91/13010 and WO 00/26119 relate to apparatuses for the separate collection of cans, plastic or glass bottles, comprising compacting means in which the containers have to be manually sorted by a user, by inserting the various types of containers through specific openings. Apparatuses of this type are very bulky and difficult to use in large refreshment areas or in very busy public establishments in which continuous disposal of large quantities of containers becomes necessary, both because of the need to select and manually insert into the single openings the various types of containers and because of the risk that an incorrect and involuntary introduction of containers of a different type into a same aperture and into a corresponding compacting device can cause undesirable contamination of the material to be recycled; they thus require time and particular attention by an operator.

Apparatuses for automatic collection and compacting of beverage containers of the indicated type, arising from post-consumption, are further disclosed in US 4.345.679, EP 0.612.046 and WO 99/43579.

In particular EP 0.612.046 relates to an apparatus for the separate collection of the containers, such as bottles and metal cans, in which the containers are introduced through a front opening to be transferred to an identification zone where the single containers are identified by the barcode with which they are normally provided, and are then conveyed to a compacting device to be reduced in volume and collected in suitable containers.

Apparatuses of this type on the one hand enable various types of containers to be recognised, sorted and compacted but on the other hand enable only one container at a time to be inserted and compacted; they accordingly again require particular attention from any operator and a consequent loss of time if a great number of containers has to be compacted continuously. Further, to identify the single containers it is necessary to rotate the containers to correctly orientate the barcode in relation to the scanning device, with consequent constructional complexity of the apparatus and a relatively long time for recognising and compacting the single containers. Further, identifying containers by the normal barcode, with which they are provided, has limits and drawbacks because as the label with the barcode might be missing, damaged or difficult to read. Again, apparatuses of this type are unsuitable for use in busy feeding environments, where an operator is mainly involved in preparing and serving beverages and food to the public, so that the necessity of properly pre-sorting the containers would lead to a loss of time.

From DE 3905231, which constitutes the nearest prior art to this invention, a method and an apparatus are known for the separate collection and compaction of only glass bottles of different colours. The bottles are randomly inserted into respective horizontal conduits of a container positioned at one end of a linear conveyor, on which the single glass bottles are sequentially pushed and identified by colour thereof; once the single bottles have been identified they are compacted, being reduced into pieces and dropped into respective collecting containers.

Although a similar apparatus permits the single glass bottles to be randomly dropped into the channels of the collecting container, it is still unsuitable for use in very busy refreshment areas and for separate collection and selective disposal of beverage containers of different type and/or dimensions.

The need therefore exists to find a new and different solution by means of which it is possible to dispose rapidly, and separately, of a large quantity of beverage containers of different type and material, in particular containers in metal, glass and plastic material, reducing the containers by volume, at the same time enabling an operator to operate completely randomly and without any particular attention, by means of a single automatic apparatus that is able to recognise and sort and compact the various containers continuously; for the purposes of the present description and of the claims the term 'compacting' means a reduction in volume of the containers, by compression, crushing, reduction into pieces or shattering, according to the type of metal, glass and plastics material of the containers.

### OBJECTS OF THE INVENTION

The main object of the invention is to provide a method for separate collection and compaction of beverage containers, of different type and materials, enabling an operator to act extremely fast and completely randomly, without paying particular attention and without bothering about the type and physical features of the containers to be disposed of.

A further object of the present invention is to provide an apparatus that is suitable for the separate collection of the beverage containers to be recycled, such as cans, plastic or glass bottles and similar containers, which is suitably designed for random loading the single containers, and for identifying, sorting and automatically compacting various types of containers to be disposed of

A further object of the present invention is to form an automatic apparatus for the separate collection and selectively compaction of different types of beverage containers, which is constructively simple, suitable for being incorporated into a normal suitably equipped or variously positioned work top.

### SHORT DESCRIPTION OF THE INVENTION

The above has been made possible by a method for separate collecting and compacting of different types of beverage containers, according to the method of claim 1, and by means of the apparatus according to claim 6.

According to the present invention, a method has thus been provided for separate collection and compaction of different types of beverage containers, in metal, glass and plastic material, comprising the steps of:
randomly loading, the beverage containers on a conveyor;
identifying the single beverage containers on said conveyor according to physical features thereof; and
selectively compacting the identified beverage containers;
   characterised by:
   vertically introducing the single beverage containers in upwards and downwards open cells, in a first loading zone of a step conveyor movable along an annular path;
   detecting the presence of a beverage container in the cells of the conveyor;
   identifying the various types of beverage containers in every single cell in function of the material thereof, at a second container identification zone along said annular path;
   selectively compacting the identified beverage containers, in a third unloading zone of said annular path.

According to the invention, an apparatus is further provided for separate collection and compaction of different types of beverage containers in metal, glass and plastic material, according to the previously mentioned method, in which the apparatus comprises:
a conveyor movable along a sorting and compacting path;
means for identifying the types of containers according to physical features thereof; and
means for compacting the identified containers, characterised in that it comprises:
   a plane for supporting and sliding the containers along an annular path;
   a step conveyor configured with a plurality of vertical upwards and downwards open cells for introducing, dragging and unloading the containers along said annular path;
   a first loading zone for randomly loading the containers in the single open cells of the conveyor;
   a plurality of identification devices for identification of the material of the containers, in a second zone of the annular path, said identification devices being configured for selectively generating identification signals for the beverage containers in function of the material of the containers;
   a plurality of trapdoors for unloading the identified containers at a third unloading zone of the annular path;
   devices for compacting the containers, at said third unloading zone; and
   a control unit operatively connected to the step conveyor, to the identification devices for the containers, to the unloading trapdoors and to the compacting means, said control unit being configured for providing a step driving of the conveyor, for selectively opening the unloading trapdoors and drive the compacting means of the containers according to the identification signals emitted by said plurality of identification devices for the material of the containers.

### SHORT DESCRIPTION OF THE DRAWINGS

These and further features of the method and of the apparatus according to the invention will be illustrated in greater detail below with reference to the attached drawings, in which:
Fig. 1 is a longitudinal section of the apparatus, according to line 1-1 of figure 2;
Fig. 2 is a top plan view of figure 1;
Fig. 3 is a top plan view of the cell conveyor;
Fig. 4 is an enlarged cross section, according to line 4-4 of figure 3;
Fig. 5 is a cross section according to line 5-5 of figure 1;
Figs 6, 7 and 8 show the cell conveyor of figure 3, in three different steps of loading, identifying and compacting the containers.
Fig. 9 is a first simplified flowchart illustrating the different operating steps of the method and of the apparatus of figure 1;
Fig. 10 shows schematically, in a first operating condition, a particular embodiment of an identification device of containers, configured for selectively identifying both glass and plastic containers;
Fig. 11 shows the same identification device for containers of figure 10, in a second operating condition;
Figs 12 and 13 show, in greater detail, a second and third flow chart illustrating the method according to the invention.

### DETAILED DESCRIPTION OF THE INVENTION

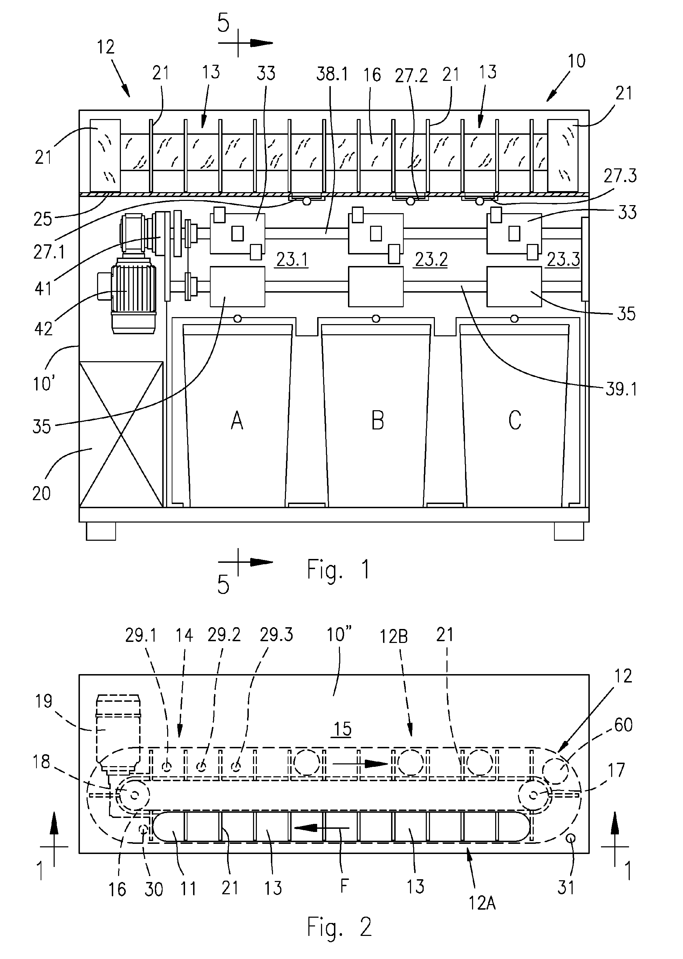

As shown in figures 1 and 2, the apparatus 10 for separate collection and compaction of beverage containers W in metal, glass and plastic material comprises an outer casing 10', closed on the different sides, the upper wall 10" of which is provided with an elongated opening 11 defining a first loading zone for completely random manual insertion by an operator, of the beverage containers W such as metal cans, glass and plastic bottles; in a position below the upper wall 10" there is a step conveyor 12 of the open cell 13 type, which extends on a horizontal plane along an annular path. For the purposes of the present description, "open cell" is defined as a vertical cell, having lateral walls that bound a space open both above and below that permit manual insertion from above and dragging of the containers along a supporting and sliding plane of said annular path, and the dropping of the containers into compacting devices for a volume or dimension reduction thereof, as explained below.

More precisely, as shown in the various figures, the cell conveyor 12 comprises a front branch 12A in a position below the introduction opening 11 for the containers W in the single open cells 13 of the conveyor, at a first loading zone, and comprises a rear branch 12B that extends parallel to the front branch 12A, along a second identification zone 14 for identifying the types of containers contained in the single open cells 13 of the conveyor 12, and along a third unloading and compaction zone 15, downstream of the identification zone 14.

The cell conveyor 12, in the example shown, comprises a continuous belt 16 that winds around two return rollers 17 and 18 having a vertical rotational axis, the roller 18 being controlled by a gear motor 19 operatively connected to an electronic control unit 20, to be moved in a step manner correlated to devices for identifying and compacting the containers; the conveyor 12 further comprises a plurality of open cells 13, as previously defined, for containing and dragging the single containers W along the annular path defined by a supporting and sliding plane 25.

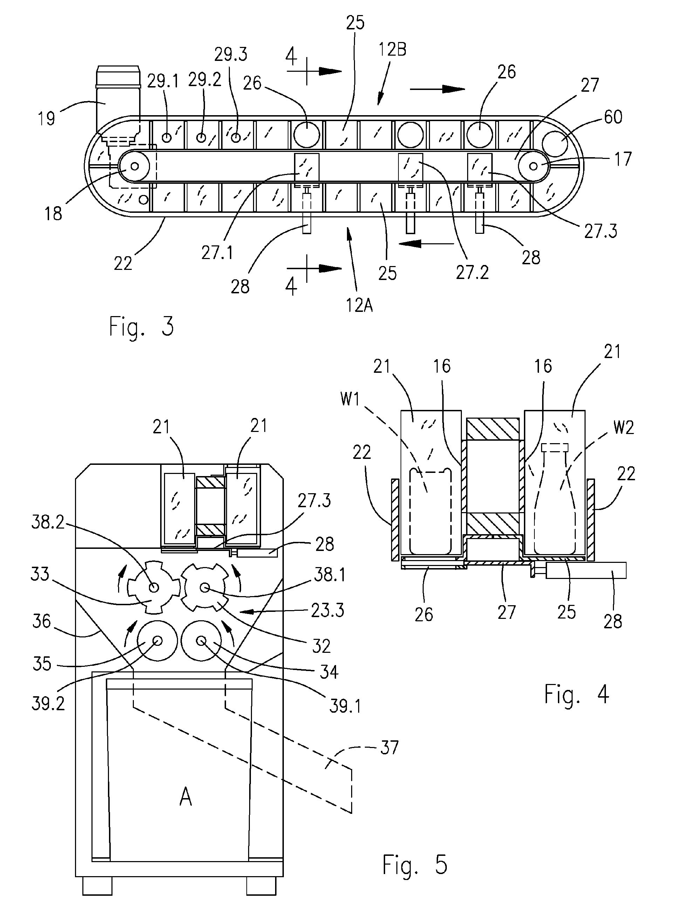

The open cells 13 of the conveyor 12 extend vertically being defined behind by the belt 16, laterally by a plurality of vertical flaps 21, spaced apart from one another by a step of the conveyor, that from the belt 16 extend towards a front guiding wall 22 shown in figures 3 and 4. The single open cells 12 of the conveyor 12 thus consist of a space closed on the sides, open both upwards and downwards.

The single cells 13 of the conveyor 12, as figures 1 and 4 show, are thus open to enable cans and/or bottles to be manually introduced from above that constitute the containers to be disposed and to enable the selective discharge downwards by dropping of the single containers W at respective compacting devices 23.1, 23.2, 23.3, figures 1 and 5, as explained further below, dragging the containers W in a standing position along the supporting plane 25.

To prevent the containers W in the single cells 13 from falling whilst they are dragged by the conveyor 12 along the collecting zone at the elongated opening 11, towards the intermediate identification zone 14 for identifying the type of container, and along the successive unloading and compacting zone 15, as shown in figures 3 and 4, in a position below the two branches 12A and 12B of the cell conveyor 12 there is provided a plane 25 for supporting and sliding the containers consisting, for example, of metal sheet in which an unloading opening 26 for the containers W has been provided at each compacting device 23. Each unloading opening 26 can be opened and closed by a trapdoor 27.1, 27.2, 27.3 driven by its own linear actuator 28, for example a pneumatic cylinder or actuator of other type operatively connected to the control unit 20, in which the trapdoors 27 are selectively driven in function of identification signals of the type of containers W emitted by a series of sensors or detecting devices 29.1, 29.2 and 29.3, for providing the control unit 20 with suitable signals and/or identification data of the position of the cells 13 in the conveyor 12, of the presence of the containers in the cells and of the type of material of the containers 13.

As schematically shown in figure 2, sensors 29.1-29.3 or devices for detecting the presence of the containers W in the single open cells 13 of the conveyor 12, and for detecting the type of container in function of the metal, glass and plastic material, are aligned in the moving direction of the conveyor, indicated by the arrow F, and are spaced apart from one another by at least one advancement step of conveyor 12, or by several steps, as shown.

The apparatus can be further provided with one safety sensor 30 at the front end, or downstream of the elongated opening 11, seen on the moving direction F of the conveyor; the safety sensor 30 intervenes to immediately stop the conveyor 12 if the containers W protrude from the cells 13, or if an operator accidentally inserts a hand; a pushbutton 31, driven by an operator, enables the conveyor 12 to be started up in a step manner.

As shown in figures 1 and 5, in a position below the rear branch 12B of the cell conveyor 12, along the unloading zone 15, at each opening 26 of the supporting and sliding plane 25 of the containers W, and at the trapdoors 27.1-27.3, a respective compacting device 23.1, 23.2 and 23.3 is provided.

Each compacting device 23.1-23.3 can be in any case configured and positioned along the rear branch 12B of the conveyor 12; for the purposes of the present description "compacting device" or "compacting means", means any device that is able to reduce in volume the single containers W, for example by compressing in the case of metal cans, or by compressing, grinding or cutting them into pieces of reduced dimensions in the case of plastic bottles and/or containers, or still crushing in the case of glass bottles or containers. Thus, according to the present invention, a large variety of compacting means can be used for compacting the various types of containers to be disposed of.

As previously mentioned, the trapdoors 27 and the compacting devices 23 are operatively connected to the control unit 20 to be selectively driven according to the signals emitted by the sensors or identification devices 29 of the material of the containers W.

In the example of figure 1 and 5, the compacting device 23 consists of a pair of upper rotating tools 32 and 33, and of a pair of dragging rollers 34 and 35 below the tools 32, 33, in which the compacting tools 32, 33 and the dragging rollers 34, 35 are supported for rotation in directions opposite one another.

In the example of figure 1 three compacting devices 23.1, 23.2 and 23.3 are shown for compacting three different types of containers, such as cans, bottles in glass and plastic material, which, after compaction and reduction in volume, are dropped into collecting containers A, B and C consisting of chests or plastic bags, which can be removed and replaced from one side of the apparatus. At each collecting container A, B, C an overfill sensor can be provided; instead of the internal containers A, B and C, each compacting device 23 can comprise a hopper 36 and a chute 37 for unloading the compacted containers W outside.

Still with reference to the example in figures 1 and 5, it is noted that the tools 32, 33 and the rollers 34, 35 of the three compacting devices 23 are fixed to respective control shafts 38.1, 38.2, 39.1 and 39.2 operationally connected, by a mechanical transmission 41, to a single control motor 42. The mechanical transmission 41 is configured for simultaneously controlling the shafts 32, 33 of the compacting tools and the shafts 34, 35 of the dragging rollers, as shown; nevertheless, it is not excluded that each compacting device is operationally connected to its own control motor.

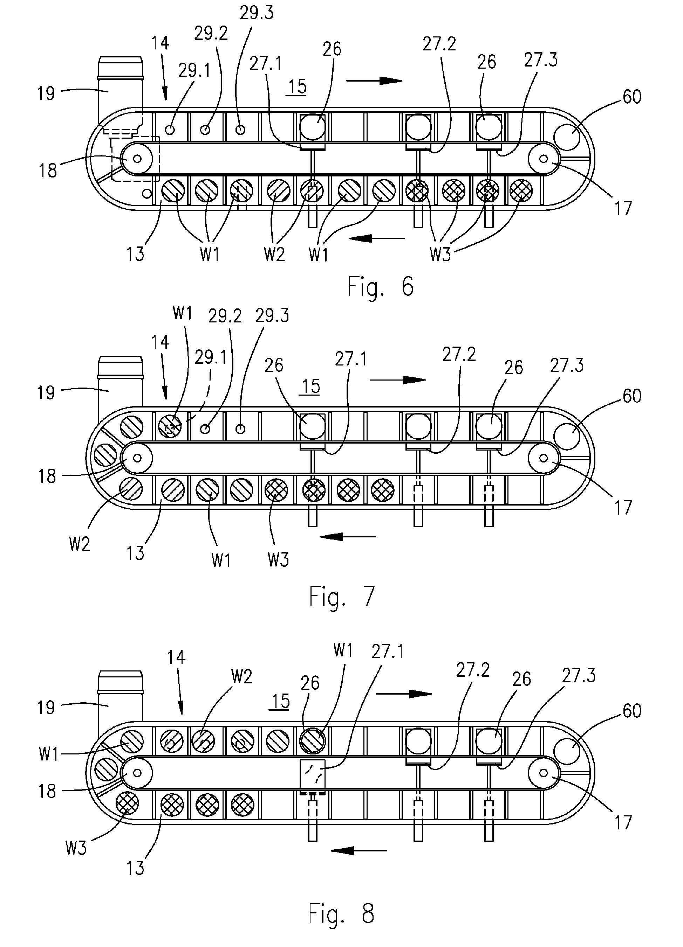

With reference to figures 6 to 9, the main steps of the method and the general features of the apparatus according to the invention will now be disclosed, if a certain number of cells 13 of the front branch 12A of the conveyor 12, that are accessible from the top through the elongated opening 11, have been loaded with three different types of containers in the quantities and positions shown in figure 6, in particular with metal W1, glass W2 and plastic W3 containers.

Once the cells 13 have been manually loaded by randomly inserting the containers W1, W2 and W3 through opening 11 (fig. 6), an operator presses the pushbutton 31 to start an operative cycle; in particular, after the startup, the cell conveyor 12 is moved in a step manner to bring the containers W in succession to the identification zone 14, and subsequently to the unloading and compacting zone 15. More precisely, the conveyor 13, advancing in a step manner, brings the first cell 13 with a container W1, to the identification zone 14 (fig. 7) where a first sensor 29.1, for example a photocell, provides the control unit 20 with a first presence signal of the container W, and a position signal of the same cell 13 in the conveyor.

The conveyor 12, advancing one step, brings the first cell 13 with the container W1 to the second sensor 29.2 consisting for example of a magnetic sensor, which detects the metallic nature of the container, providing the control unit 20 with a specific signal or identification datum of that type of container.

At the same time, a second container W1, in the subsequent cell 13, is brought to the identification zone 14 at the first sensor 19.1.

Continuing the step movement of the conveyor 12, the first cell 13 with the respective container W1 is made to advance to the unloading and compacting zone 15; as the first container W1 has been identified as being in metal, when it reaches the first compacting device 23.1, on the basis of the data stored in the control unit 20, following the identification signals of the cells 13 and the material of the containers W generated by the sensors 29.1, the control unit 20 will command the opening of the first trapdoor 27.1, causing the container W1 to drop through the unloading opening 26 and the compacting device 23.1 below. The container W1 is then crushed and compacted to make the container W1 drop into the collecting container A.

The same identification and compaction operations will follow for the subsequent metal containers W1, which are three in the case shown.

During the step advancement of the conveyor 12, when a cell 13 containing a glass container W2 is at the subsequent photocell or identification device 29.3, the latter is able to identify the new type of container and tell whether it is a glass container, supplying an identification signal to the control unit 20 which will open the trapdoor 27.2 to drop the glass container W2 into the compacting device 23.2 below. The above will continue at each step advancement of the conveyor 12, identifying and compacting the various containers W1 and W2 manually introduced at random by an operator into the open cells 13.

Thus during the step advancement of the conveyor 12, when the single cells 23 are at the identification zone 14, the containers W1, W2, W3 are consequently identified, in function of the material thereof, storing in the control unit 20 a succession of identification signals, each associated with a respective cell 13 of the conveyor 12, and with the corresponding compacting device 23.

Thus, when the containers W1 selectively identified in the zone 14 are at the compacting device 23.1, the trapdoor 27.1 is opened to cause the containers W1 to drop into the compacting device 23.1 underneath.
Similarly, continuing the step advancement of the conveyor 12, the containers W2 are identified still associating the various identification signals with the respective cells 13 of the conveyor 12, and with the specific compacting device 23.2 in figure 1.

During the step advancement of the conveyor 12, the trapdoors 27 are normally closed; thus when a cell 13 with a container W1, W2 or W3 is at the respective compacting device 23, the control unit 20 will command the opening of the trapdoor to drop the container W into the compacting device beneath, whilst the other trapdoors remain closed.

These operations will be repeated for the various types of containers W2, W1 and W3 that randomly follow one another into the various open cells 13 of the conveyor 12, until all the cells 13 are empty; the conveyor 12 is stopped after the sensor 29 has detected that a certain number of cells 13 are empty.

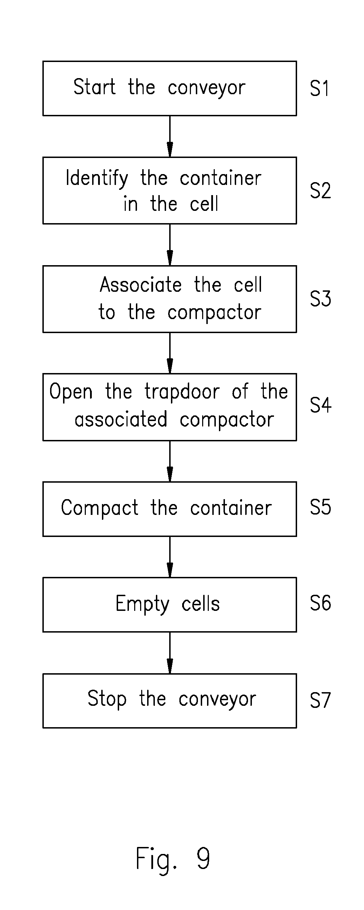

The flow chart of figure 9 shows the basic steps of the method and the operation of the apparatus according to which, after the startup step S1, the conveyor 12 is advanced in a step manner to move the single cells 13 to the identification zone 14, at which the sensor system 29, step S2, detects the presence and selectively identifies the various types of containers W in the single cells 13, by the material thereof; the identification signal of the material of each container W is sent to the control unit 20 which associates the signal with a specific cell 13 and with a respective compacting device, step S3. When a specific cell 13 reaches the corresponding compacting device 23 with which it has been associated, the trapdoor 27 is opened, step S4, the container W is unloaded and dropped into the compacting device 23 below, step S5; the container W is than compacted and reduced in volume by being compressed, cut into pieces or shattered according to whether the material is metal, glass, or of plastic, being dropped into a chest or underneath collecting container.

Once it has been detected that all the cells are empty, step S6, the conveyor 12 is stopped, step S7; in this manner the apparatus is ready for filling the cells 13 that are aligned on the opening 11, with other containers W enabling an operator to completely random insert new containers W into the upwardly open single cells 13.

The sensor devices that are suitable for detecting the presence of the containers W in the single open cells 13 of the conveyor, and the sensor devices that are suitable for detecting the type of material of the containers W, can be of any type; for example, the sensor device for detecting whether a container is present in a cell 13, or whether the cell 13 is full or empty, can consist of a reflection photocell or other type of photocell. Otherwise, the sensor device that is suitable for detecting the presence of a metal container can be a sensor of magnetic type.

In turn, the sensor devices for glass or plastic can be of the reflection type or of another type; nevertheless, detecting whether a determined container W is a glass or a plastic bottle can sometimes be difficult or may require the use of sensor devices that are extremely complex, costly and hardly suitable for this specific use.

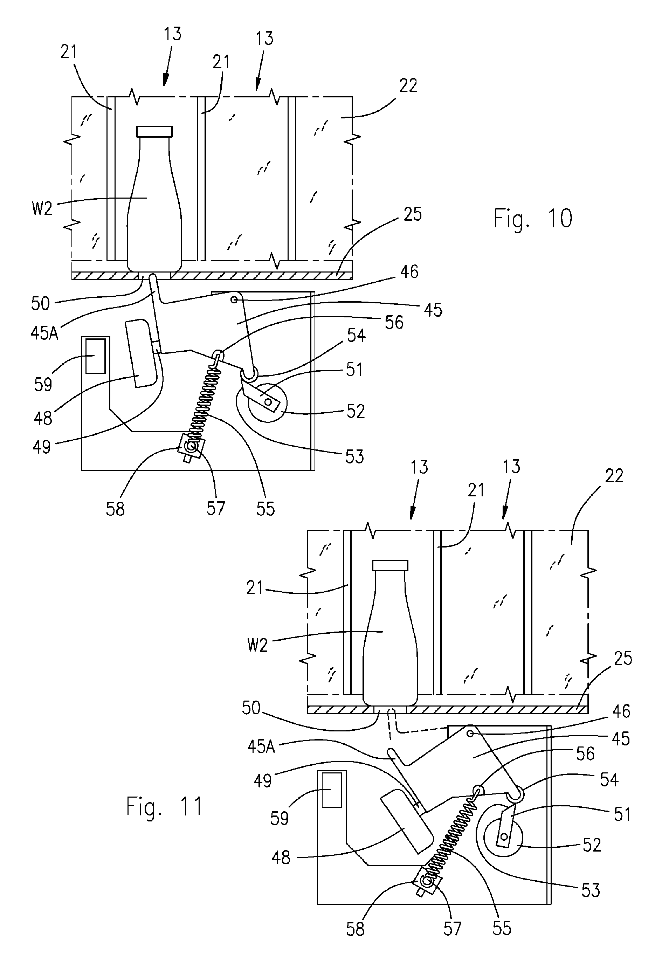

Therefore, according to another aspect of the invention, a sound frequency sensor or detecting device has been provided that is configured in such a manner as to discriminate whether a container W is made of glass or plastic; a possible embodiment of a similar detecting device is schematically shown in figures 10 and 11.

As shown, the detecting device comprises a rotatable hammer 45 pivoted in 46 on a frame 47; a cup-shaped metal element 48 having a "bell" function that is able to emit a sound when it is subjected to a strike or vibration, is fixed on one side of the hammer 45; the bell 48 can be anyway fixed to the hammer 45, for example by a flexible hinge 49, an elastic pad or in another manner to enable the bell 48 to perform a short movement against the hammer 45, or to vibrate when a protrusion 45A of the hammer 45 traverses a hole 50 of the sliding plane 25, strikes a container W in a downwards open cell 13, which at a certain moment, during the advancement step of the conveyor 12, is at the identification zone 14.

The hammer 45 is controlled by an "escapement" device driven by an electric motor 52 operatively connected to the control unit 20, in a manner correlated with the step movement of the conveyor 12, as explained below.

The escapement device comprises a cam element, consisting for example of a lever 51 driven by the electric motor 52. The lever 51, or equivalent cam device, is configured at one end thereof with a slanted surface 53, forming an angle with respect to the longitudinal axis of the lever, against which a cam follower roller 54 slides, at one end of the hammer 45 opposite the protrusion 45A; the cam follower roller 54 is maintained in contact with the lever 51 or escapement cam, by a traction spring 55 an end of which is hooked at an intermediate point 56 of the hammer 55, whereas the other end 57 is hooked to a slidable member 58 to set the tension of the snap spring 55; a sensor 59 is able to detect the sound frequency of the bell 48 when the hammer probe 45 hits a glass container W2.

The detecting device disclosed thus consists of a mechanical hammer 45, which, following hitting of a glass container W2, is able to transmit a vibration to the cup or bell shaped element 48, which is able to produce a sound at a particular frequency that a sensor 59 is able to detect and transform into a digital signal that is sent to the control unit 20, as an identification signal the glass material of the container W2.

The operation of the detecting device of the glass and plastic containers is briefly as follows: in the rest condition of figure 10, the hammer 45 is maintained stationary inasmuch the spring 55, in particular the hooking points 56 and 57 thereof, are axially aligned on the pivot point 46 of the hammer 45.

Following the clockwise rotation of the lever or cam 51 and the anticlockwise rotation of the hammer 45, when the cam follower roller 54 is at the slanted surface 53, the hammer 45 springs forwards rotating clockwise, opposite the preceding one, striking with the protrusion 45A, through the hole 50 in the sliding plane 25, the bottom of the container W inside the downwards open cell 13 that at the time is in that position.

Following the strike of the hammer 45 against the container W, the bell 48 will emit a sound, the frequency of which is detected by the sensor 59. The motor 52, from the rest position of the lever 51 shown in figure 10, will then make a complete rotation to return the hammer 45 to the starting position, with the protrusion 45A slightly below the sliding plane 25 to enable the conveyor 12 to advance by a step.

The sound frequencies detector 59 consists for example of an electronic card consisting of a microphone for receiving the acoustic signal, of an amplifier and of a bandpass filter for excluding undesired frequencies and possible external disturbances, and of a sampler and a converter to generate a digital signal that is transmitted to the control unit 20 of the apparatus.

Thus, if the hammer 45 hits a stiff body consisting of a glass container, the sound of the bell 48 will be detected (YES) and sent to the control unit 20 as a signal indicative of the glass material of the container W2; otherwise (NO) the non-emission of sound by the bell 48, following the strike of the hammer 45 against a container W3 of yieldable material, is interpreted as a presence in the cell 13 of a plastic container.

In order to avoid environmental disturbance and interference, the sensor 59 will be activated by the control unit 20, only for a time step immediately following the strike of the hammer 45 against the container W in the cell 13; during this time step, the compacting devices can be stopped to further reduce possible causes of disturbance and noise.

By mistake or distraction, other types of containers or foreign bodies may be inserted into the cells 13 of the conveyor 12 and these may be erroneously identified as metal, glass or plastic containers. Thus, according to a further improvement of the invention, after the containers detecting stations at the sensors 29.1, 29.2 and 29.3 a fourth inspection station can be provided that is provided with an image detector by means of which the image of the object, can, bottle or other content in every single cell 13 will be detected. The detected image will be compared with sample images pre-stored in the control unit 20; in this manner it is possible to prevent objects that do not conform to the stored sample images, being able to cause erroneous opening of a trapdoor and driving of a respective compacting device.

The foreign object or the non-conformant container thus detected, can be ejected, for example along a bend portion of the conveyor 12, figure 3, where the flaps 21 open angularly to enable the foreign object or container to drop through a suitable discharge hole 60 in the sliding plane 25. Alternatively to or in combination with the image detector or camera, a weight sensor can be provided for rejecting containers, for example bottles or cans containing part of the beverage, the weight of which exceeds a preset weight set in the control unit 20.

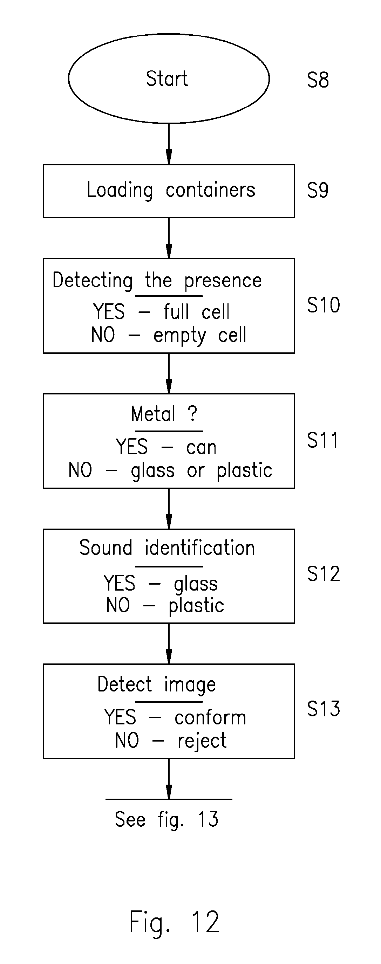

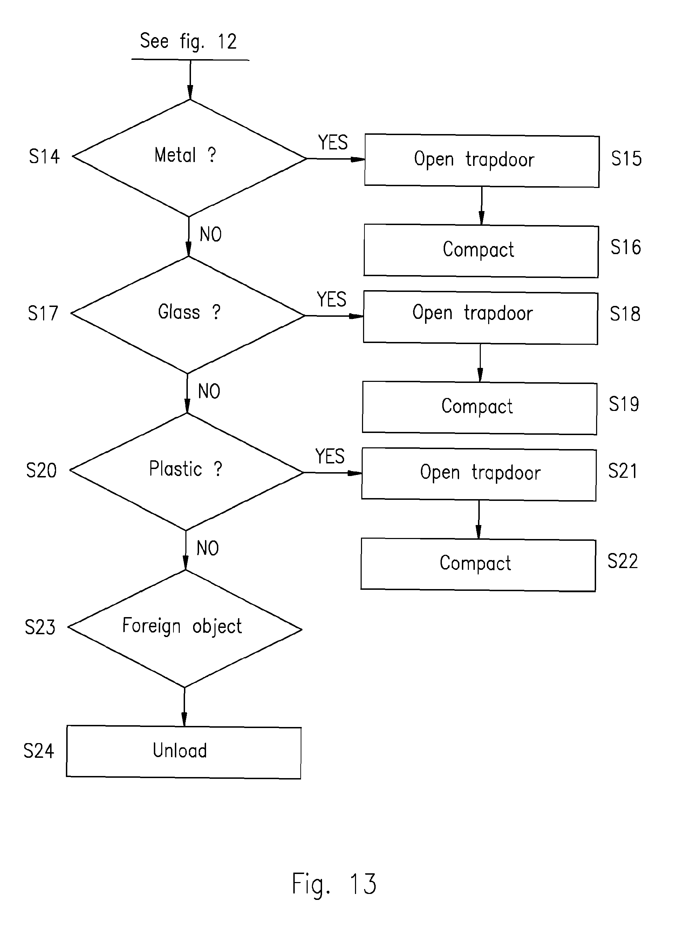

With reference to the flow charts of figures 12 and 13 the method according to the invention will now be disclosed in greater detail. After starting up the apparatus, Start step S9, an operator loads from above the single containers W in the single open cells of the conveyor, through the elongated opening 11, completely randomly without any particular attention to the type of container.

After a certain number of containers W have been loaded and the apparatus has been started by pushing the pushbutton 31, the conveyor 12 will start to advance in a step manner, bringing the first container W to the sensor 29.1, which will check the presence, or not, of the container W in the specific cell 13; the control unit 20, by the signal received by the sensor 29.1, will assign to that cell a position reference and presence or absence datum of a container; (YES) full cell, (NO) empty cell, step S10.

The conveyor 12 will advance by a step, bringing the cell 13 to the second sensor 19.2, which will detect whether the container W is a metal container (YES) or of another material (NO), step S11; if the container W is in metal (YES), a new identification datum will be stored in the control unit for that specific cell. If the answer is NO, the step movement of the conveyor brings the cell to the sensor 29.3, where a sound check will be made, step S12, for example by means of the detecting device of figures 10 and 11.

In this case, if the hammer 45 strikes against a glass container, the bell 48 will generate a sound of suitable frequency that will be recognised by the sensor 59 as indicative of a glass container (YES); in the control unit 20 a new significant datum will then be added for that specific cell 13 and container W.

If the answer is NO, i.e. if no sound is generated by the bell 48 because of the strike of the hammer 45 against a non-stiff or yielding body, the control unit 20 will store a further significant datum for that cell, indicating a possible plastic container; by means of various identification signals generated by the sensors 19.1, 19.2 and 19.3, in a memory of the control unit 20 an electronic identification label is thus formed for each specific cell and type of container in metal, glass or plastic material contained therein.

As previously mentioned, as containers of other type or foreign bodies can be inserted into the cells 13, at a subsequent station a further visual inspection is conducted to detect the image of the container or object contained in the cell 13, step S13.

If the comparison between the detected image and sample images pre-stored in the control unit 20 provides a positive conformity reply, YES, the container can be subsequently compacted. On the other hand, if the reply is NO, of non-compliance, the container or the object contained in the cell 13 will be subsequently expelled.

After the identification steps of the containers according to the type of material have finished, as indicated in the subsequent flow chart of figure 13, the various containers W will be unloaded and compacted in the compacting zone 15. To be precise, if the container is a metal container, for example a can or the like, YES step S14, the control unit, by the stored data will enable the opening of the specific trapdoor 27.1 and the driving of the specific compacting device 23.1, steps S 15 and S16.

If on the other hand the container is not in metal, NO, but is in glass, the cell 13, by movement of the conveyor 12 of one or two steps, will be at the subsequent sensor, step S17; thus the control unit 20 will enable opening of the trapdoor 27.2 and driving of the corresponding compacting device 23.2, steps S18 and S19.

If, on the other hand, it is detected that the container W is presumably in plastic material, the conveyor advancing again by one or more steps in function of the number of steps necessary to position each respective cell 13 with respect to the various sensors, step S20, the control unit 20 will enable the opening of the corresponding trapdoor and driving of the respective compacting device 23.3, steps S21 and S22.

Lastly, if the system has detected that a foreign body or another type of container has been inserted into a cell 13, step S23, the latter is rejected, step S24, in a discharge position through the opening 60 downstream of the compacting zone 15.

From what has been stated in the previous examples, it will be understood that the invention relates to a method and corresponding apparatus that is able to automatically recognise various types of containers in metal, glass and plastic; thus the load of the containers in the single open cells 13 of the conveyor 12, as specified, can be made in an extremely simple way and randomly, at the introduction opening 11.

The user, after loading the various free cells 13, can start up the step conveyor 12 and activate the identification and compaction process of the containers W, thus having new free cells available for loading other containers.

After each compacting step with the conveyor 12 stationary, the conveyor will start again step movement only when the trapdoors close again, to continue the operative cycle, stopping only after the presence sensor has detected that a certain number of empty cells 13 has passed.

The cans and the bottles, or more in general the compacted containers, i.e. compressed, cut or crushed, will be dropped into a collecting container below, or dropped onto a chute towards the other collecting containers located outside the apparatus.

From what has been said and shown in the attached drawings it will have been understood that a method and an apparatus have been supplied for identifying, sorting and compacting containers of different type by identification signals of the type of material with which they are made.

It is nevertheless understood that other modifications or variations can be made to the method and to the apparatus disclosed, without thereby departing from the claims.

## Claims

1. A method for separate collection and compaction of different types of beverage containers (W), in metal, glass and plastic material, comprising the steps of:
randomly loading the beverage containers (W) on a conveyor (12);
identifying the single beverage containers (W) on said conveyor (12), according to physical features thereof; and
selectively compacting the identified beverage containers (W);
**characterised by**:
vertically introducing the single beverage containers (W) in upwards and downwards open cells (13) in a first loading zone (11) of a step conveyor (12) movable along an annular path;
detecting the presence of a beverage container (W) in the cells (13) of the conveyor (12);
identifying the various types of beverage containers (W) in every single cell (13), in function of the material thereof, at a second container identification zone (14) along said annular path;
selectively compacting the identified beverage containers (W), in a third unloading zone (15) of said annular path.

2. The method for separate collection and compaction of different types of beverage containers (W) according to claim 1, **characterised by**:
generating identification signals of the single beverage containers (W) in each cell (13) of the conveyor (12), along said second identification zone (14);
sequentially storing the identification signals of the single beverage containers (W) in a control unit (20);
configuring the annular path of the conveyor (12) with a plurality of unloading trapdoors (17) and compacting devices (23) of the beverage containers (W) along said third compacting zone (15); and
selectively opening the unloading trapdoors (17) and dropping the beverage containers (W) into the compacting devices (23), by said control unit (CU), in function of the identification signals of the beverage containers (W) generated in said second identification zone (14).

3. The method according to claim 2, **characterised by**:
detecting an image of every single identified beverage container (W);
storing in the control unit (CU) sample images of the types of beverage containers (W) to be identified;
comparing the detected image of every single identified beverage container (W) with said sample images stored in the control unit (20);
enabling the unloading and compacting of every single beverage container (W) when the detected image conforms to one of the sample images, respectively ejecting the beverage container (W) if the detected image does not conform to one of the sample images stored in the control unit (20).

4. The method according to one or more preceding claims for compacting different types of beverage containers in metal (W1), glass (W2) and plastic (W3) material, **characterised by** identifying a container of glass (W2) or of plastic (W3) material in each cell (13) of the conveyor (12), by a sound identification device (19, 3) configured for identifying a glass container (W2) by generation of an acoustic signal, respectively for identifying a plastic container (W3) by the absence of an acoustic signal.

5. The method according to claims 2 and 4, **characterised by** temporarily stopping the compacting devices (23) during the sound identification of the beverage containers of glass (W2) and plastic (W3) material.

6. An apparatus (10) suitable for separate collection and compaction of different types of beverage containers (W) in metal (W1), glass (W2), plastic (W3) material, in which the single beverage containers (W) are selected, compacted and dropped into respective collecting containers (A, B, C), said apparatus comprising a conveyor (12) movable along a sorting and compacting path for the beverage containers (W) in function of physical features of the beverage containers (W), **characterised by** comprising:
a step conveyor (12) configured with a plurality of upwards and downwards open cells (13), configured for dragging the beverage containers (W) along an annular path comprising a randomly loading zone (11), an identification zone (14) and a compacting zone (15) for the beverage containers (W);
a plane (25) for supporting and sliding the beverage containers (W) positioned below the step conveyor (12), said supporting and sliding plane (25) being configured with unloading openings (26) for the beverage containers (W) at said compacting zone (15);
means (19) for detecting the presence and identifying the type of beverage containers (W) in said identification zone (14), in function of identifying signals indicative of the material of the single beverage containers (W);
trapdoors (27) for closing the unloading openings (26) and device (23) for compacting the beverage containers (W) operatively connected to a control unit (20), said control unit (20) being configured for associating every single cell (13) of the step conveyor (12) and a specific beverage container (W) identified in the identification zone (14), with a respective compacting device (23) in function of the identification signals of the beverage containers (W) generated by said means (19) for detecting and identifying the types of beverage containers (W).

7. The apparatus (10) according to claim 6, **characterised in that** the plane (25) for supporting and sliding the beverage containers (W), in said compacting zone (15), comprises a number of unloading openings (26) corresponding to the number of the types of beverage containers (W) to be compacted, each unloading opening (26) being associated to a closing trapdoor (27), and to a compacting device (23) for the beverage (W) positioned below each trapdoor (27) and the plane (25) for supporting and sliding the beverage containers (W).

8. The apparatus (10) according to claim 7, **characterised in that** the compacting devices (23) associated with said unloading openings (26), are operatively connected to a single control motor (42).

9. The apparatus (10) according to claims 6 and 7, **characterised by** comprising a collecting container (A, B, C) or a chute (37) for conveying the compacted containers (W), positioned below each compacting device (23).

10. The apparatus (10) according to claim 6, **characterised by** comprising an elongated opening (11) at the first loading zone for the beverage containers (W), and at least one safety sensor (30) for stopping the step conveyor (12).

11. The apparatus (10) according to claim 9, **characterised by** comprising an overfill sensor at each collecting container (A, B, C) for the compacted containers (W).

12. The apparatus (10) according to one or more of the preceding claims, 6-11 **characterised in that** the step conveyor (12) comprises a continuous belt (16) that extends along said annular path, the belt (16) comprising a plurality of side flaps (21) spaced apart from one another, that protrude from the belt (16) to a peripheral guide wall (22); the belt (16), the side flaps (21) and the peripheral guide wall (30) defining a plurality of upwards and downwards open vertical cells (13) spaced apart from one another by a step of the conveyor (12).

13. The apparatus (10) according to claim 6, **characterised in that** the means (19) for identifying the type of beverage container of glass (W2) and of plastic (W3) material comprises a sound identification device for the beverage containers (W2, W3), configured for identifying a glass container (W2) by generation of an acoustic signal, respectively for identifying a plastic container (W3) by absence of an acoustic signal.

14. The apparatus (10) according to claim 13, **characterised in that** said sound identification device comprises:
a support frame, a hammer (45) pivoted to the support frame, and a sound generating member (48); the hammer (45) being configured with a protrusion (45A) suitable for penetrating through a hole (50) of the plane (25) for supporting and sliding the beverage containers (W), and
comprises a cam shaped escapement device (51, 52) and a load spring (55) operatively connected to the hammer 45, and a sensor (59) for detecting the sound generated by the strike of the hammer (45) against a beverage container of glass (W2).

15. The apparatus (10) according to claim 14, **characterised by** comprising means (58) for adjusting the tension of the load spring (55) of the hammer (45).

16. The apparatus (10) according to claim 6, **characterised by** comprising an image detector and/or a weight sensor of the beverage containers (W), at the container (W) identification zone (14).
